# EUROPEAN PATENT APPLICATION

(11) **EP 3 255 127 A1**
(43) Date of publication of application: **13.12.2017**
(21) Application number: 16001310.8
(22) Date of filing: 09.06.2016
(51) Int. Cl.: C10L 3/10, C10L 3/12, B01D 53/047, C01C 1/02

(54) **METHOD OF PROCESSING A COAL SEAM GAS**

(71) Applicant: Linde Aktiengesellschaft, 80331 München (DE)
(72) Inventor: Peakman, Kevin, Burraneer, NSW 2230 (AU)
(74) Representative: Richmond, Sarah

(57) **Abstract**

The present invention relates to a method of processing a coal seam gas (140), wherein a membrane separation and a pressure swing adsorption of a coal seam gas (140) extracted from a coal seam (101) are conducted, in the course of which a purified coal seam gas (235) is produced, wherein in the course of the membrane separation a first gas component is separated from the coal seam gas (140) and wherein in the course of the pressure swing adsorption a second gas component (231) is separated from the coal seam gas (140), wherein a nitrogen separation of the separated second gas component (231) is conducted, in the course of which nitrogen (245) is produced, wherein an ammonia generation process using the produced nitrogen (245) and the produced purified coal seam gas (235) is conducted, in the course of which ammonia is produced.

## Description

The present invention relates to a method of processing a coal seam gas and a coal seam gas processing system.

### Prior art

Methane (CH₄) is formed as part of the process of coal formation ("coalification"). In the course of coalification, methane can be enclosed in coal seams and surrounding rock strata. This methane can be extracted from the coal seams in several different ways.

For example, methane can be extracted from the coal seams in connection with coal mining. During the process of coal mining, for example as a direct result of the physical process of coal extraction, methane can be released into the coal mine. Methane extracted in this manner is often referred to as coal mine methane (CMM).

Methane can also be extracted from coal seams before the actual mining process is conducted as part of a pre-drainage. Such coal seams are potential future coal mines, i.e. coal seams which could or will be mined in the future. Accordingly extracted methane is often referred to as coal bed methane (CBM) or Virgin Coal Bed Methane (VCBM). Moreover, methane can be extracted from coal mines that have been abandoned following the completion of mining operations, referred to as abandoned mine methane (AMM).

The methane is usually extracted for safety reasons from coal mines or future coal mines, since methane is extremely flammable and forms explosive mixtures with air. The extracted methane can usually be destroyed, e.g. flared. By flaring, the methane can be disposed and prevented from being released directly into the atmosphere, thus reducing greenhouse gas emissions.

This way, however, large amounts of methane are wasted and cannot be used effectively. Thus, it is desirable, to provide a possibility of processing methane derived from coal seams.

### Disclosure of the invention

The invention relates to a method of processing a coal seam gas and a coal seam gas processing system with the features of the independent claims. Further advantages and embodiments of the invention will become apparent from the description and the appended figures.

The coal seam gas processing system is especially adapted to conduct the method according to the invention. Advantages and embodiments of this method and the coal seam gas processing system according to the invention arise from the following description in an analogous manner.

According to the invention, a membrane separation and a pressure swing adsorption of a coal seam gas derived from a coal mine are conducted, in the course of which a purified coal seam gas, especially methane or natural gas, is produced.

In the course of membrane separation, a first gas component is separated from the coal seam gas. In the course of pressure swing adsorption, a second gas component is separated from the coal seam gas. It should be understood that a specific gas or a mixture of several specific gases can be separated from the coal seam gas as first gas component or second gas component, respectively.

A nitrogen separation of the separated second gas component is conducted, in the course of which nitrogen is produced. This nitrogen and the purified coal seam gas are used to conduct an ammonia generation process, in the course of which ammonia is produced.

As mentioned, gas, particularly methane, is enclosed in coal seams or surrounding rock strata as part of the process of coal formation ("coalification"). This gas can be extracted from the coal seams especially in the course of coal mining. During the process of coal mining, especially as a direct result of the physical process of coal extraction, gas is released into the coal mine. This extracted gas, especially in mixture with air, is especially conducted out of the coal mine as coal seam gas. Gas enclosed in coal seams can also be extracted as coal seam gas before an actual mining process is conducted (as part of a pre-drainage) or from abandoned coal mines.

In this context the term coal seam gas should especially be understood to comprise a gas or mixture of gases, respectively, which is/are conducted out of a coal seam. The coal seam gas is especially extracted from a coal mine, either from an actively operated coal mine, or an abandoned coal mine, or a potential or future coal mine, i.e. a coal seam which could or will be mined in the future. Particularly, a mixture of methane and air is derived as coal seam gas.

Components of this coal seam gas, especially nitrogen and methane or natural gas, can be utilised for ammonia production. Since coal seam gas usually has a high portion of air and/or possibly other components, these components are expediently separated from the coal seam gas before it is utilised. For this purpose, the coal seam gas, which is extracted from a coal seam, is transferred to the coal seam gas processing system. The coal seam gas is purified and the purified coal seam gas, especially methane or natural gas is produced.

The coal seam gas processing system comprises at least one membrane separation unit adapted to separate the first gas component from the coal seam gas. The membrane separation unit comprises one or a plurality of synthetic membranes. By the use of specific membranes, e.g. comprising pores and/or minute gaps in the molecular arrangement of a continuous structure, components of the coal seam gas can selectively be separated. The membranes can for example be made of polymers, for example polyethylene, polyamide, polyimide, cellulose acetate, polysulphone, and/or polydimethylsiloxa, or can also be made or ceramic materials. Preferably, CO₂ and/or H₂S are separated from the coal seam gas as first gas component in the course of the membrane separation. Particularly polyamide membranes can be used for this purpose.

The coal seam gas processing system moreover comprises at least one pressure swing adsorption unit adapted to separate the second gas component from the coal seam gas. The pressure swing adsorption unit especially comprises several adsorption vessels that are packed with specific adsorptive materials, e.g., zeolites, activated carbon, and/or molecular sieves.

Pressure swing adsorption makes use of the fact that gases are adsorbed under high pressure. When the pressure is reduced, the previously adsorbed gas is desorbed. Pressure swing adsorption is based on a physical binding of specific gas molecules to specific adsorbent materials. The respective force acting between the specific gas molecules and the specific adsorbent material depends on the gas component, type of adsorbent material, partial pressure of the gas component and operating temperature. In the course of the pressure swing adsorption specific components of the coal seam gas can be separated according to the molecular characteristics and affinity for specific adsorbent materials of the corresponding components.

Thus, by use of specific adsorbent materials and by specific pressures for the coal seam gas, specific gas components are selectively extracted from the coal seam gas as second gas components. Preferably N₂ as well as O₂, and/or CO₂ are separated from the coal seam gas as second gas components. For example, carbon molecular sieves (CMS) can be used to separate residual moisture, CO₂ and/or O₂.

For example, the so called adsorbent "Molecular Gate" can be used to extract Nitrogen and/or CO₂ from the coal seam gas as second gas components. This "Molecular Gate" adsorbent is a type of molecular sieve that has the ability to adjust pore size openings within an accuracy particularly of 0.1 angstrom. The pore size can precisely be adjusted to allow the removal of N₂ and/or CO₂ while having minimal capacity for e.g. methane. Nitrogen and methane molecular diameters are approximately 3.6 angstroms and 3.8 angstroms, respectively. In a "Molecular Gate" adsorbent-based system a pore size of e.g. 3.7 angstroms can be used, such that the adsorbent permits the nitrogen (as well as e.g. carbon dioxide, hydrogen sulfide, water, and/or oxygen) to enter the pore and be adsorbed while excluding methane, which passes through the fixed bed of adsorbent.

The coal seam gas processing system moreover comprises at least one nitrogen separation unit adapted to separate nitrogen from the second gas component. For example, the nitrogen can be separated using membranes or using a cryogenic nitrogen generation process. Particular, high-purity nitrogen is produced, especially with a purity of at least 95%, particularly at least 97%, or preferably at least 99%. Furthermore, the coal seam gas processing system comprises at least one ammonia generation unit adapted to produce ammonia using the nitrogen and the purified coal seam gas (preferably, methane or natural gas). Thus, natural gas and nitrogen are used to produce ammonia, particularly via the Haber-Bosch process. Each ammonia generation unit especially comprises a hydrogen unit and an ammonia synthesis unit. In the hydrogen unit, hydrogen is extracted from the purified coal seam gas, particularly from methane or natural gas. In the synthesis unit, ammonia synthesis is performed using the extracted hydrogen and the produced nitrogen. Ammonia can easily be produced with high efficiency and low operating costs.

According to the invention, it is not necessary to dispose of the coal seam gas extracted from coal seams e.g. by flaring, in order to prevent it from being released into the atmosphere. Instead, the derived coal seam gas can be processed in-situ and used to produce ammonia. The coal seam gas is not wasted. The gas processing system can easily and cost-efficiently be installed at coal seam sites.

The invention is particularly advantageous for coal seam sites located close to agricultural areas. The produced ammonia can thus further be utilised for agricultural purposes, e.g. as fertiliser. By the invention, a coexistence of agricultural use and coal mining of fertile soils providing natural resources can be achieved.

The method of producing ammonia is particularly automatised and designed for unattended operation. The process and the coal seam gas processing system can especially be flexibly adjusted to changes or variations in the extracted coal seam gas, especially to changes in its composition, and to changes in the feed rate, according to which the extracted coal seam gas is conducted to the coal seam gas processing system. Moreover, process and system can be particularly be adjusted to changing predetermined purity requirements of the purified coal seam gas.

Furthermore, the coal seam gas processing system can preferably comprise buffer tanks or surge tanks. These tanks can especially be used to dampen fluctuations in flow rate, composition or temperature or the coal seam gas. They can also allow single units of the coal seam gas processing system to be shut down for maintenance without shutting down the entire coal seam gas processing system.

Advantageously, a liquid separation of the coal seam gas is conducted, in the course of which a liquid, particularly water, is removed from the coal seam gas. For this purpose the coal seam gas processing system preferably comprises at least one liquid separation unit. The liquid separation unit can particularly also be referred to as a gas-liquid separator, flash drum, knock-out drum, knock-out pot, compressor suction drum or compressor inlet drum. The liquid separation unit especially comprises one or more vessels, through which the coal seam gas is conducted. The liquid can settle at the bottom of a vessel, where it can be extracted out of the vessel.

Advantageously, the nitrogen is produced in the course of a cryogenic nitrogen generation process. For this purpose, the nitrogen separation unit is constructed as a cryogenic nitrogen plant. A cryogenic nitrogen plant can for example comprise a so called warm end container (e.g. including air compressors and molecular sieve stations) and a coldbox (e.g. including heat exchangers, condensers, rectification columns). In the course of the cryogenic nitrogen generation process, the nitrogen is separated by means of rectification, especially utilising different evaporation temperatures of different gases of the second gas component.

For example, the second gas component can be filtered and compressed to have a required process pressure. The gas can afterwards be precooled and fed into molecular adsorbers, where impurities (such as water, carbon dioxide, hydrocarbons, etc.) are removed. In heat exchangers the gas can be cooled down to almost liquefaction temperature and fed into the bottom of the rectification column. The gas is rectified and nitrogen can be withdrawn at the top of the rectification column with high purity.

According to a preferred embodiment of the invention, ammonia is produced in the course of a micro ammonia generation process. The ammonia generation unit is thus preferably constructed as a micro ammonia plant. In the course of micro ammonia generation process or small-scale ammonia generation, ammonia is produced with a capacity of approximately 1000 tons per day at most and particularly with capacities between 50 tons and 500 tons per day.

Micro ammonia plants and cryogenic nitrogen plants can easily be constructed, implemented, and installed at corresponding coal seam locations. Micro ammonia plants and cryogenic nitrogen plants can especially be designed in a modularised and standardised manner. Thus, the specific design of micro ammonia plants/cryogenic nitrogen plants can easily be adapted to predetermined requirements of the corresponding coal seam site. Micro ammonia plants and cryogenic nitrogen plants can for example be skid-mounted and a plug and play design can be provided. Short delivery times, low installation costs and minimum on-site construction effort can be accomplished.

According to a preferred embodiment, the membrane separation unit(s), the pressure swing adsorption unit(s), the liquid separation unit(s), the nitrogen separation unit(s), and/or the ammonia generation unit(s) are arranged inside a skid. The skid is especially constructed as a frame or framework, respectively. The skid can be constructed of bars or beams, especially made of steel or metal. Moreover, especially fluid elements like valves and pipes connecting the different units are also arranged inside the skid. The coal seam gas processing system is particularly modularised. Different units can flexibly be added to or removed from the coal seam gas processing system. Particularly, variable numbers of nitrogen separation units, ammonia generation units, membrane separation units and pressure swing adsorption units can be arranged inside the skid. Thus, the coal seam gas processing system can easily be adapted to the specifications of the corresponding coal seam site. According to a particularly advantageous embodiment, the at least one membrane separation unit and the at least one pressure swing adsorption unit are arranged inside a skid. This skid is preferably connected to the at least one nitrogen separation unit, the at least one ammonia generation unit, and the at least one liquid separation unit.

According to an advantageous embodiment of the invention, pre-drainage gas, coal mine methane, ventilation air methane, gob gas, and/or abandoned mine methane derived from a coal seam are purified as coal seam gas.

As mentioned, methane is especially released as a direct result of the physical process of coal extraction. In modern underground mines; coal can for example be extracted through longwall mining. Longwall mining, as with other sub-surface techniques, especially releases methane trapped within the coal seam into the air supply of the mine as layers of the coal face are removed.

Methane released from the worked coal face according to this way can especially be diluted and removed by a ventilation system. This ventilation system can especially be designed to move vast quantities of air through the mine. The methane is particularly diluted to concentrations below the lower explosive limit of 5-15%, particularly to a concentration below 1%. The diluted methane or the corresponding air-methane-mixture, respectively, can be conducted by the ventilation system out of working areas of the coal mine into shafts leading to the surface as the coal seam gas. This air-methane-mixture removed out of the coal mine is also referred to as ventilation air methane (VAM). Ventilation air methane can have concentrations of methane in the range between 0.05% and 0.8%.

Also, methane emissions out of coal seams especially arise from the collapse of surrounding rock strata. For example, after a section of the coal seam has been mined, the artificial roof and wall supports can be removed as mining progresses to another section. The debris resulting from the collapse is known as gob. This gob also releases methane often referred to as "gob gas" into the mine.

In order to pre-empt the release of gob gas from post mining collapse, vertical gob wells can be drilled into the coal seam's surrounding strata before mining activities pass through that section. These pre-drilled vertical gob wells can remove the gob gas once the collapse takes place, thus avoiding the release of methane directly into the mine. The gob gas can be conducted out of the coal mine via the vertical gob wells as the coal seam gas. By this method, gob gas is exposed to significantly lower volumes of air than ventilation air methane. Thus, gob gas can have a methane concentration in the range between 35% and 75%.

Methane trapped within the coal seam can also be extracted prior to the actual commencement of mining operations in the course of a pre-drainage. For this purpose, boreholes can be drilled into the coal seam from the surface and/or from underground. Methane or a mixture of methane and other gases can be extracted from the coal seam as so called pre-drainage gas or coal bed methane (CBM) or Virgin Coal Bed Methane (VCBM). A pre-drainage can be conducted several years in advance prior to mining a coal seam. The coal seam can in this case be considered as a potential or future coal mine. So called Virgin Coal Bed Methane (VCBM) is extracted from coal seams, in which the coal will remain unmined.

By pre-drainage especially up to 90% of the methane enclosed in the coal seam can be captured. Pre-drainage can drastically reduces gas flow from worked coal seams, which is important in reducing outburst risk, reducing downtime and lowering ventilation costs. Pre-drainage gas can have a methane concentration of up to 90%.

Moreover, after coal mines have been abandoned following the completion of mining operations, significant amounts of methane can remain trapped in the mine. As mentioned, methane extracted from abandoned coal mines is also referred to as abandoned mine methane (AMM). Abandoned coal mines can for example be sealed, wherein any entrances into the mine (e.g. ventilation shafts, methane drainage wells) have been sealed. Methane trapped inside a sealed coal mine can be recovered by drilling wells or boreholes analogously to the pre-drainage. Thus, gob gas from post mining collapses can for example be extracted from the abandoned mine. Furthermore, pre-existing ventilation shafts can be used to extract methane, similar to extracting ventilation air methane from actively operated coal mines.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
FIG. 1 schematically shows a preferred embodiment of a coal seam gas processing system according to the invention, adapted to conduct a preferred embodiment of a method according to the invention.
FIG. 2 schematically shows a preferred embodiment of a method according to the invention as a block diagram.

### Detailed description

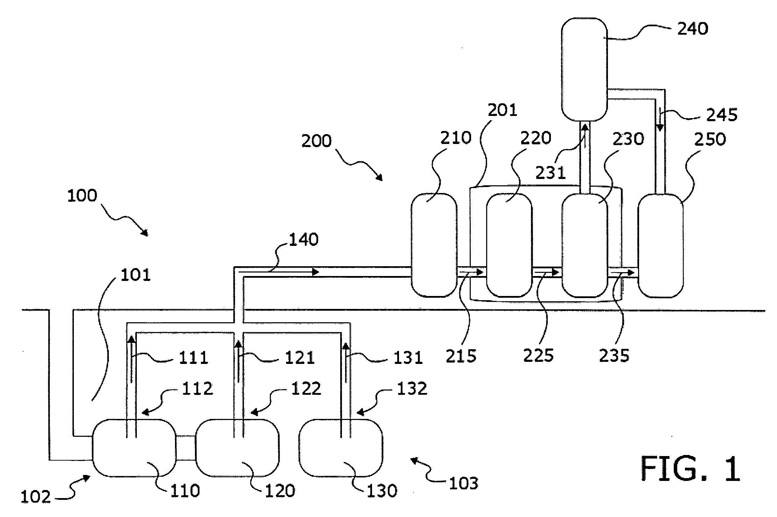

In FIG. 1 a preferred embodiment of a coal seam gas processing system 200 is schematically shown. The coal seam gas processing system 200 is located at a coal seam site 100. At the coal seam site 100, a coal seam gas 140 is extracted from coal seams 101.

Be it assumed that coal is mined in an actively operated coal mine 102. In a section 110 of the coal mine 102, coal is extracted from the coal seams 101. As a result of this coal extraction, methane is released from coal seams 101 into the coal mine 102. By a ventilation system 112 the methane is diluted and a methane-air-mixture is extracted from the coal mine 102, referred to as ventilation air methane 111.

Be it also assumed that a section 120 of the coal mine 102 has been previously mined, but is not mined actively any more. An artificial roof and wall supports of this section 120 were removed as mining progresses to section 110. This typically leads to a collapse of the mine in this section 120. The debris resulting from the collapse ("gob") releases a so called "gob gas" into the mine 102. Vertical gob wells 122 have been drilled into the coal seam's surrounding strata before mining activities passed through this section 120. By means of these pre-drilled vertical gob wells 122 the gob gas 121 is extracted once the collapse of section 120 has taken place.

Be it also assumed that an unmined section 130 of the coal seam site shall be mined in the future. This section 130 is considered to be a potential coal mine 103. In the course of a pre-drainage, boreholes 132 are drilled into the coal seam 101 from the surface. A mixture of methane and other gases is extracted from the coal seam 101 of section 130 through the boreholes 132 as so called pre-drainage gas or coal bed methane (CBM) 131.

Ventilation air methane 111, gob gas 121 and/or pre-drainage gas 131 can be extracted from the coal seam 101 as coal seam gas 140. Ventilation air methane 111 has concentrations of methane in the range especially between 0.05% and 0.8%. Gob gas 121 has a methane concentration particularly in the range between 35% and 75%. Pre-drainage gas 131 has a methane concentration particularly up to 90%.

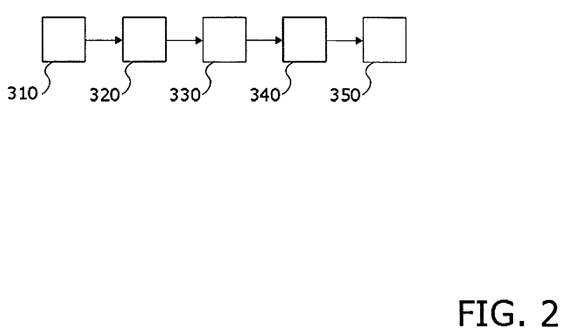

The coal seam gas 140 is conducted to the coal seam gas processing system 200, in which it is processed and ammonia is produced. The coal seam gas processing system 200 is adapted to conduct a preferred embodiment of a method according to the invention, which is schematically shown in FIG. 2 as a block diagram. FIG. 1 and FIG. 2 will hereafter be described collectively.

In a first step 310 the coal seam gas 140 extracted from the coal seam 101 is conducted to a liquid separation unit 210, especially constructed as a knock-out pot, and a liquid separation of the coal seam gas 140 is conducted. In the liquid separation unit 210, water is removed from the coal seam gas.

In step 320 the dehydrated coal seam gas 215 is conducted to a membrane separation unit 220 and a membrane separation is conducted, in the course of which a first gas component is separated from the dehydrated coal seam gas 215. The membrane separation unit 220 especially comprises several synthetic membranes, in order to selectively separate CO₂ and H₂S from the dehydrated coal seam gas 215 as first gas component.

In step 330 the membrane separated coal seam gas 225 is conducted to a pressure swing adsorption unit 230 and a pressure swing adsorption is conducted, in the course of which a second gas component 231 is separated from the membrane separated coal seam gas 225. The pressure swing adsorption unit 230 comprises vessels with specific adsorbent materials. The membrane separated coal seam gas 225 is conducted through the vessels with specific pressures. Thus, O₂, N₂, and CO₂ are selectively extracted from the membrane separated coal seam gas 225. A corresponding mixture of O₂, N₂, and CO₂ is thus separated as the second gas component 231.

After the coal seam gas 140 is dehydrated and after the first and second gas components are separated from the coal seam gas 140, purified coal seam gas, preferably purified methane 235 is obtained.

In step 340 the second gas component 231 is conducted to a nitrogen separation unit, particularly a cryogenic nitrogen plant 240, and a cryogenic nitrogen generation process is performed. The cryogenic nitrogen plant 240 can comprise air compressors, molecular sieve stations, heat exchangers, condensers, and rectification columns. Nitrogen 245 with a purity of preferably at least 99% is obtained and separated from the second gas component 231 by means of rectification, especially utilising different evaporation temperatures of the different gases of the second gas component 231.

In step 350 the nitrogen 245 and the purified methane 235 thus produced are conducted to an ammonia generation unit, preferably a micro ammonia plant 250. An ammonia generation process is performed and ammonia is produced using the nitrogen 245 and the purified methane 235.

By means of the micro ammonia plant 250, ammonia is produced with a capacity of particularly 1000 tons per day at most, preferably capacities between 50 tons per day and 500 tons per day. The produced ammonia can be filled into storage tanks, which can be dispatched to customers. Preferably, the produced ammonia is further utilised for agricultural purposes, e.g. as fertiliser, in agricultural areas located close to the coal seam site 100.

The membrane separation unit 220 and the pressure swing adsorption unit 230 are preferably arranged inside a skid 201. The skid 201 is connected with the knock-out pot 210, the cryogenic nitrogen plant 240, and the micro ammonia plant 250. The micro ammonia plant 250 and the cryogenic nitrogen plant 240 can also be provided in separate skids. Thus, a plug and play design of the different units 220, 230, 240, and 250 can be provided and a modularisation and standardisation of the coal seam gas processing system 200 can be achieved. Short delivery times, low installation costs and minimum on-site construction effort can be accomplished.

### Reference list

- 100: coal seam site
- 101: coal seams
- 102: coal mine
- 103: potential coal mine
- 110: section of the coal mine
- 111: ventilation air methane
- 112: ventilation system
- 120: section of the coal mine
- 121: gob gas
- 122: gob wells
- 130: unmined section of the coal seam site
- 131: pre-drainage gas, coal bed methane (CBM)
- 132: boreholes
- 140: coal seam gas

- 200: coal seam gas processing system
- 201: skid
- 210: liquid separation unit, knock-out pot
- 215: dehydrated coal seam gas
- 220: membrane separation unit
- 225: membrane separated coal seam gas
- 230: pressure swing adsorption unit
- 231: second gas component
- 235: methane, natural gas
- 240: nitrogen separation unit, cryogenic nitrogen plant
- 245: nitrogen
- 250: ammonia generation unit, micro ammonia plant

- 310 to 350: steps of the method

## Claims

1. Method of processing a coal seam gas (140),
- wherein a membrane separation and a pressure swing adsorption of a coal seam gas (140) extracted from a coal seam (101) are conducted (320, 330), in the course of which a purified coal seam gas (235) is produced,
- wherein in the course of the membrane separation a first gas component is separated from the coal seam gas (140, 320) and wherein in the course of the pressure swing adsorption a second gas component (231) is separated from the coal seam gas (140, 330),
- wherein a nitrogen separation of the separated second gas component (231) is conducted, in the course of which nitrogen (245) is produced (340),
- wherein an ammonia generation process using the produced nitrogen (245) and the produced purified coal seam gas (235) is conducted, in the course of which ammonia is produced (350).

2. Method according to claim 1, wherein furthermore a liquid separation of the coal seam gas (140) is conducted (310), in the course of which a liquid is removed from the coal seam gas (140).

3. Method according to claim 1 or 2, wherein the nitrogen (245) is produced in the course of a cryogenic nitrogen generation process (340).

4. Method according to any one of the preceding claims, wherein the ammonia is produced in the course of a micro ammonia generation (350).

5. Method according to any one of the previous claims, wherein in the course of the membrane separation CO₂ and/or H₂S are separated from the coal seam gas (140) as first gas component (320).

6. Method according to any one of the previous claims, wherein in the course of the pressure swing adsorption O₂, and/or CO₂ as well as N₂, are separated from the coal seam gas (140) as second gas component (231, 330).

7. Method according to any one of the previous claims, wherein pre-drainage gas (131), coal mine methane, ventilation air methane (111), gob gas (121), and/or abandoned mine methane derived from a coal seam (101) are purified as coal seam gas (140).

8. Method according to any one of the previous claims, wherein methane or natural gas is produced as the purified coal seam gas (235).

9. Coal seam gas processing system (200), adapted to process a coal seam gas (140) derived from a coal seam (101), comprising:
- at least one membrane separation unit (220) adapted to separated a first gas component from the coal seam gas (140) and
- at least one pressure swing adsorption (230) unit adapted to separate a second gas component (231) from the coal seam gas (140) and to produce a purified coal seam gas (235),
- at least one nitrogen separation unit (240) adapted to separate nitrogen (245) from the second gas component (231), and
- at least one ammonia generation unit (250) adapted to produce ammonia using the produced nitrogen (245) and the produced purified coal seam gas (235).

10. Coal seam gas processing system (200) according to claim 9, further comprising at least one liquid separation unit (210) adapted to remove a liquid from the coal seam gas (140).

11. Coal seam gas processing system (200) according to claims 9 or 10, wherein the at least one membrane separation unit (220), the at least one pressure swing adsorption unit (230), the at least one nitrogen separation unit (240), the at least one ammonia generation unit (250), and/or the at least one liquid separation unit (210) are arranged inside a skid (201).

12. Coal seam gas processing system (200) according to any one of the claims 9 to 11, wherein the nitrogen separation unit (240) is constructed as a cryogenic nitrogen plant.

13. Coal seam gas processing system (200) according to any one of the claims 9 to 12, wherein the ammonia generation unit (250) is constructed as a micro ammonia plant.
